# EUROPEAN PATENT APPLICATION

(11) **EP 4 556 440 A1**
(43) Date of publication of application: **21.05.2025**
(21) Application number: 23219333.4
(22) Date of filing: 21.12.2023
(51) Int. Cl.: C01B 25/37, C01B 25/45, H01M 4/58

(54) **PREPARATION METHOD OF IRON PHOSPHATE PRECURSOR FOR BATTERIES**

(30) Priority: 20.11.2023 TW 112144673
(71) Applicant: Advanced Lithium Electrochemistry Co., Ltd., Taoyuan City 330 (TW)
(72) Inventor: WANG, Jing-Xuan, 330 Taoyuan City (TW); FU, Kuan-Yin, 330 Taoyuan City (TW); HUANG, An-Feng, 330 Taoyuan City (TW)
(74) Representative: 2K Patentanwälte Blasberg Kewitz & Reichel

(57) **Abstract**

A preparation method of an iron phosphate precursor for batteries is disclosed and includes steps of: (a) providing a phosphoric acid and an iron powder, wherein the iron powder has an apparent density of iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder; (b) reacting the phosphoric acid with the iron powder to generate a first product; and (c) heat-treating the first product in an air or oxygen atmosphere to form the iron phosphate precursor.

## Description

### FIELD OF THE INVENTION

The present disclosure relates to a preparation method of a cathode material (method for preparing a cathode material), and more particularly to a preparation method of an iron phosphate precursor for batteries.

### BACKGROUND OF THE INVENTION

Due to the sustained global energy shortage, the price of oil becomes higher and the environmental consciousness rises day by days. The most popular subject of the energy industry is how to provide a clean and effective energy. In a variety of alternative energies, the chemical battery is the most actively developing technology. With continued investment in research and development of related industries, the chemical battery technology is not only continuously improved and enhanced, but also widely used in our daily life, such as consuming electronics, medical equipment, electric bicycles, electric motorcycles, electric cars and electric buses.

Particularly, the Lithium Ferric Phosphate (LiFePO₄, hereinafter referred as "LFP") composite batteries are widely accepted by the market because of the large current and long life cycle. Also, the LFP composite batteries have no risk of explosion and have the advantages of high power efficiency and low pollution so as to be used in replace of the conventional lead-acid, nickel-metal hydride and nickel-cadmium batteries. After years of research, the Lithium Ferric Phosphate Nano-Co-crystalline Olivine (hereinafter referred as "LFP-NCO") battery is developed. The LFP-NCO battery is a single compound consisting of Li, Fe, P and metals or precursor of metal composition, and is a non-coated and non-doped material, so that the LFP-NCO battery can significantly improve the lower conductivity and eliminate impurities. Moreover, the price of the LFP-NCO battery is lower than conventional lithium ferric phosphate materials, in which the LFP-NCO battery has higher market competitiveness and becomes the main product of the industry.

In general, ferric phosphate (FePO₄), lithium hydroxide (LiOH) and lithium carbonate (LizCOs) are applied to process a reaction of the conventional preparation method of LFP-NCO. However, the production efficiency of the final lithium iron phosphate compound is affected by the state of the iron phosphate precursor before reacting with lithium hydroxide (LiOH) and lithium carbonate (Li₂CO₃). Since the iron phosphate precursor is mainly prepared from iron and phosphoric acid, this reaction process needs to consider the reaction rate, the exothermic influence and the difficulty of manufacturing process operation. Moreover, the product quality is seriously affected by the conversion rate of the obtained iron phosphate precursor.

There is a need of providing a preparation method of an iron phosphate precursor for batteries, so as to improve the product quality, reduce the raw material cost, the time cost and the operational difficulty of the process, and obviate the drawbacks encountered from the prior art.

### SUMMARY OF THE INVENTION

It is an object of the present invention to provide a preparation method of an iron phosphate precursor for batteries, so as to improve the product quality, reduce the raw material cost, the time cost and the operational difficulty of the process.

Another object of the present invention provides a preparation method of an iron phosphate precursor for batteries. By controlling the specification of the raw iron powder, the preparation reaction of the iron phosphate precursor is optimized to avoid the reaction rate being too fast and increasing the difficulty of the manufacturing process operation. On the other hand, in the two-segmented reaction of the phosphoric acid, the deionized water and the iron powder, if the iron powder reactant is not reacted completely, the grinding process can be further cooperated to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively.

A further object of present invention provides a preparation method of an iron phosphate precursor for batteries. Through the two-segmented reaction of the phosphoric acid, the deionized water and the iron powder, it ensures the full reaction of phosphoric acid and iron powder, and achieves the effects of significantly reducing the waste of raw materials and comprehensively improving product quality. Furthermore, the preparation method of iron phosphate precursor is further cooperated to form the battery composite material, and it helps to significantly shorten the time required for grinding, thereby reducing the process time and the money costs. At the same time, the pH sensitivity of the manufacturing process can be reduced, the viscosity of the raw material and the blockage of processing pipes are avoided, the processing temperature is stably controlled, and the operational difficulty of the manufacturing process and the mass production line is reduced.

In accordance with an aspect of the present disclosure, a preparation method of an iron phosphate precursor for batteries is provided. The preparation method includes steps of: (a) providing a phosphoric acid and an iron powder, wherein the iron powder has an apparent density of the iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder; (b) reacting the phosphoric acid with the iron powder to generate a first product; and (c) heat-treating the first product in an air or oxygen atmosphere to form the iron phosphate precursor.

In an embodiment, the iron powder has a BET surface area ranging from 700 cm²/g to 1300 cm²/g, the first particle-size range is less than 212 µm and greater than 45 µm, and the second particle-size range is less than or equal to 45 µm.

In an embodiment, the step (c) is performed at a temperature ranging from 610°C to 670°C for a holding time of at least one hour.

In an embodiment, the first particle-size range is less than 212 µm and greater than 45 µm, the second particle-size range is less than or equal to 45 µm, and the weight of the iron powder in the second particle-size range accounts between 10 % and 25 % of the total weight of the iron powder.

In an embodiment, the first product is amorphous phosphates, and the formula of the first product is written as a-FePO₄ • xH₂O, wherein x > 0.

In an embodiment, the step (b) further includes steps of: (b11) allowing deionized water to dissolve a first quantity of the phosphoric acid for forming a first phosphoric acid solution at a first temperature; (b12) processing a reaction of the first phosphoric acid solution and the iron powder at a second temperature, lowering the reaction temperature to a third temperature after the second temperature is reached by the reaction temperature, and maintaining the reaction temperature for a first time period; and (b13) lowering the reaction temperature to a fourth temperature and adding a second phosphoric acid solution consisting of a second quantity of the phosphoric acid, and processing a reaction of the first phosphoric acid solution, the second phosphoric acid solution and the iron powder for a second time period, so as to produce the first product.

In an embodiment, the weight ratio of the first quantity to the second quantity is 3:1.

In an embodiment, the first temperature ranges from 35 °C to 45 °C, the second temperature is equal to or less than 60 °C, the third temperature is equal to or less than 50 °C, and the fourth temperature is equal to or less than 30 °C.

In an embodiment, the first time period is at least 3 hours and the second time period ranges from 5 hours to 9 hours.

In an embodiment, the step (b) further includes steps of: (b21) performing a first grinding action to grind the first product to have a particle size D99 smaller than a first length; and (b22) processing the reaction for a third time period.

In an embodiment, the first length is less than 100 µm, and the third time period ranges from 6 hours to 12 hours.

In an embodiment, the step (b) further includes steps of: (b31) adding a carbon source and a metal compound to form a precursor solution with the first product, and performing a second grinding action; and (b32) performing a spray drying action to the precursor solution when the precursor solution is ground to have a particle size D70 less than a second length in the second grinding action.

In an embodiment, the spray drying action is implemented by a rotary spray dryer, an entrance temperature of the rotary spray dryer is 210 °C, an exit temperature of the rotary spray dryer is 95 °C, and a rotational speed of the rotary spray dryer ranges from 300 Hz to 400 Hz.

In an embodiment, the second length ranges from 1 µm to 10 µm.

In an embodiment, the first grinding action and the second grinding action are performed at a rotational speed ranging from 450 rpm to 650 rpm.

In an embodiment, the metal compound and the iron phosphate precursor form an iron phosphate precursor composite material in the step (c), and are heat-treated to form a battery composite material, wherein the chemical formula of the battery composite material is LiFePO₄, and the metal compound is a lithium-containing compound.

In an embodiment, the lithium-containing compound is one selected from the group consisting of lithium hydroxide, lithium carbonate and a mixture thereof, and the battery composite material is a lithium ferric phosphate nano-co-crystalline olivine (LFP-NCO).

In an embodiment, the step (c) includes heat-treating at a temperature of 325°C for 0.5 hours, heat-treating at a temperature of 550°C for 0.5 hours, and heat-treating at a temperature of 650°C for 1 hour.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 schematically illustrates a flow chart of a preparation method of an iron phosphate precursor for batteries according to an embodiment of the present disclosure;
FIG. 2 schematically illustrates a detailed flow chart of the preparation method of the iron phosphate precursor for batteries according to an embodiment of the present disclosure;
FIG. 3 schematically illustrates another detailed flow chart of the preparation method of the iron phosphate precursor for batteries according to an embodiment of the present disclosure;
FIG. 4 schematically illustrates a detailed flow chart of the preparation method of the iron phosphate precursor cooperated to form a battery composite material according to an embodiment of the present disclosure;
FIG. 5 schematically illustrates another detailed flow chart of the preparation method of the iron phosphate precursor cooperated to form the battery composite material according to an embodiment of the present disclosure;
FIG. 6 schematically illustrates the XRD analysis diagram of an iron phosphate precursor product prepared by the preparation method of the iron phosphate precursor of the present disclosure;
FIG. 7 shows the relationship between the ratio of the fine powder ≦ 45 µm of the raw material iron powder and the relative conversion rate of the first product obtained; and
FIG. 8 shows the relationship between the ratio of the fine powder ≦ 45 µm of the raw material iron powder and the final particle size D99 of the first product obtained.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

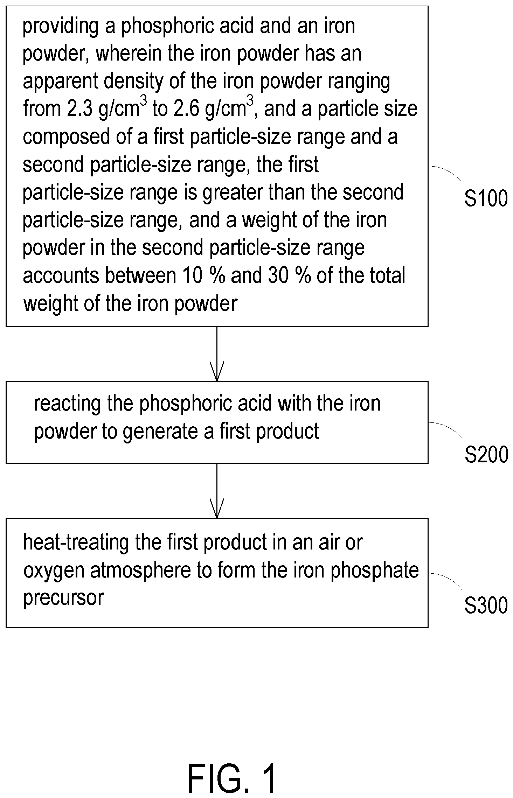

Please refer to FIG. 1. FIG. 1 schematically illustrates a flow chart of a preparation method of an iron phosphate precursor for batteries according to an embodiment of the present disclosure. A preparation method of an iron phosphate precursor of the present disclosure includes steps as follows. At first, as shown in the step S100, a phosphoric acid and an iron powder are provided. The formula of the phosphoric acid is written as H₃PO₄, and the formula of the iron powder is written as Fe. In addition, the iron powder has a specific specification, so that the preparation reaction of the iron phosphate precursor is optimized to avoid the reaction rate being too fast, increasing the difficulty of the manufacturing process operation, or causing the safety issues. In the embodiment, the iron powder has an apparent density of the iron powder ranging from 2.3 g/cm³ to 2.6 g/cm³. The particle size of the iron powder is composed of a first particle-size range and a second particle-size range. Preferably but not exclusively, the particle size of the iron powder is divided into two ranges by sieving. In the embodiment, the first particle-size range is the coarse powder less than 212 µm and greater than 45 µm, and the second particle-size range is the fine powder less than or equal to 45 µm. Namely, the first particle-size range is greater than the second particle-size range. A weight of the iron powder in the first particle-size range accounts between 90 % and 70 % of the total weight of the iron powder, and a weight of the iron powder in the second particle-size range accounts between 10 % and 30 % of the total weight of the iron powder. In other words, it allows to sieve the iron powder to obtain a maximum particle size of the iron powder less than 212 µm, and a fine powder weight of the iron powder less than or equal to 45 µm accounts between 10 % and 30 % of the total weight of the iron powder for meeting the requirements. Preferably, the weight of the iron powder in the first particle-size range accounts between 90 % and 75 % of the total weight of the iron powder, and the weight of the iron powder in the second particle-size range accounts between 10 % and 25 % of the total weight of the iron powder. That is, the fine powder weight of the iron powder less than or equal to 45 µm accounts between 10 % and 25 % of the total weight of the iron powder. In the embodiment, the iron powder further has a BET surface area ranging from 700 cm²/g to 1300 cm²/g. Certainly, the first particle-size range and the second particle-size range are adjustable according to the practical requirements. It allows to divide the iron powder into two ranges of the coarse powder and the fine powder by sieving. In the following embodiments, the first particle-size range and the second particle-size range are respectively explained by using the coarse powder of less than 212 µm and greater than 45 µm and the fine powder ≦ 45 µm obtained through sieving, but the present disclosure is not limited thereto.

Next, as shown in the step S200, the phosphoric acid is reacted with the iron powder to generate a first product. In the embodiment, the first product is amorphous phosphates, and the formula of the first product is written as a-FePO₄ • xH₂O, wherein x > 0.

Then, as shown in the step S300, the first product is heat-treated in an air or oxygen atmosphere to form the iron phosphate precursor. In the embodiment, the first product is heat-treated at a temperature ranging from 610°C to 670°C for a holding time of at least one hour. Certainly, the present disclosure is not limited thereto.

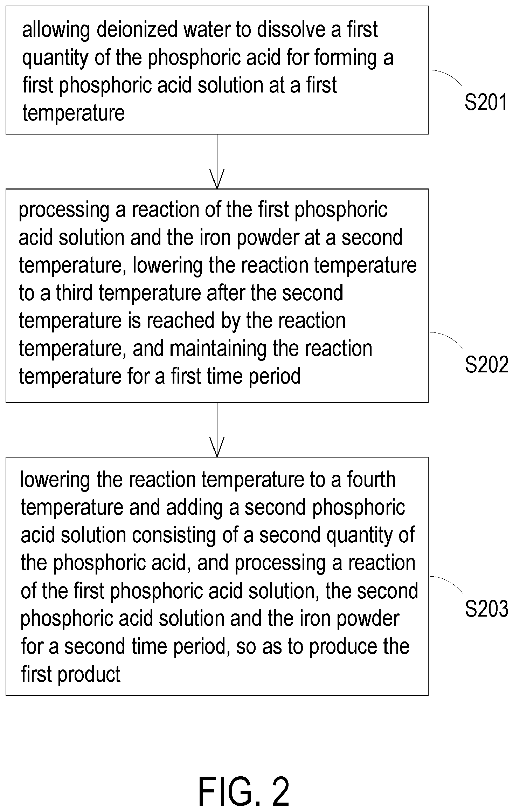

Please refer to FIG. 1 and FIG. 2. FIG. 2 schematically illustrates a detailed flow chart of the preparation method of the iron phosphate precursor for batteries according to an embodiment of the present disclosure. As shown in FIG. 1 and FIG. 2, the detailed flow chart of the step S200 of the preparation method of the iron phosphate precursor of the present disclosure includes steps as follows. As shown in the step S201, deionized water is allowed to dissolve a first quantity of the phosphoric acid for forming a first phosphoric acid solution at a first temperature. Preferably but not exclusively, the first temperature can be preheated to a temperature ranging from 35°C to 45°C, and is preferred to be preheated to 42°C, but not limited thereto. Next, as shown in the step S202, a reaction of the first phosphoric acid solution and the iron powder is processed at a second temperature, the reaction temperature is lowered to a third temperature after the second temperature is reached by the reaction temperature, and the reaction temperature is maintained at the third temperature for a first time period. In some embodiments, the first phosphoric acid may be replaced by a compound releasing phosphate ions in a solution so as to be reacted with the iron powder in order to produce the first product, but not limited thereto. The second temperature is equal to or less than 60°C, and is preferably 60°C, and the third temperature is equal to or less than 50°C, and is preferably 50°C. The first time period is at least 3 hours, and is preferably 3 hours.

In other words, the preferred embodiment of the step S202 is not limited to be implemented as processing a reaction of the first phosphoric acid solution and the iron powder at 60°C, lowering the reaction temperature to 50°C after the reaction temperature reached 60°C, and maintaining the reaction temperature at 50°C for 3 hours. Then, as shown in step S203, the reaction temperature is lowered to a fourth temperature and a second phosphoric acid solution consisting of a second quantity of the phosphoric acid is added, so that the reaction of the first phosphoric acid solution, the second phosphoric acid solution and the iron powder is processed for a second time period to produce the first product.

In this embodiment, the first product is amorphous phosphates, and the formula of the first product is written as a-FePO₄ • xH₂O (x>0). The fourth temperature is equal to or less than 30°C, and is preferably 30°C. The second time period ranges from 5 hours to 9 hours. The weight ratio of the first quantity to the second quantity is 3:1, i.e. the first quantity is 75% and the second quantity is 25%.

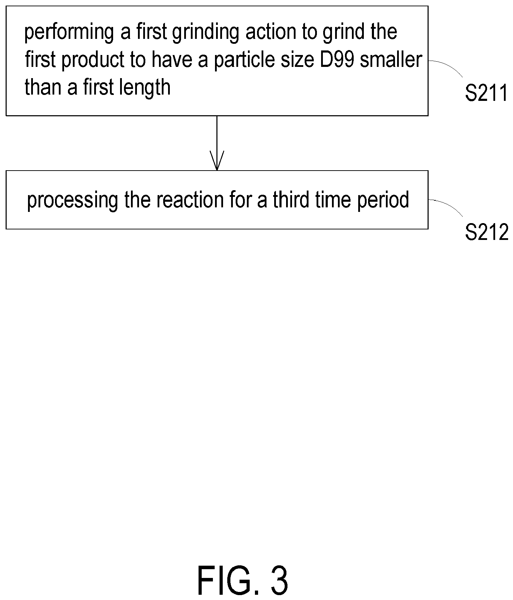

Please refer to FIG. 1 and FIG. 3. FIG. 3 schematically illustrates another detailed flow chart of the preparation method of the iron phosphate precursor for batteries according to an embodiment of the present disclosure. As shown in FIG. 1 and FIG. 3, the detailed flow chart of the step S200 of the preparation method of the iron phosphate precursor of the present disclosure further includes steps as follows. As shown in the step 211, after the aforementioned reaction is processed for 5 hours to 9 hours, a first grinding action is performed to grind the first product to have a particle size D99 smaller than a first length. Then, as shown in the step S212, the reaction is further processed for a third time period to complete the reaction between phosphoric acid and iron powder. In this embodiment, the iron powder has the specific specification. Although the metal powder has the characteristic of fast reaction speed, it is easy to form a barrier on the surface of the powder due to the too fast reaction speed. In the embodiment, if the iron powder reactant is not reacted completely, the grinding process can be cooperated to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively.

Preferably but not exclusively, in the embodiment, the first length is less than 100 µm, and the third time period ranges from 6 hours to 12 hours. In the embodiment, the first grinding action is performed at a first rotational speed. Preferably but not exclusively, the first rotational speed ranges from 450 rpm to 650 rpm, and is preferably 550 rpm. Thereby, in the two-segmented reaction of the phosphoric the acid, deionized water and the iron powder, the phosphoric acid solution and the iron powder can fully react. Consequently, the waste of raw materials can be reduced significantly and the conversion rate of iron phosphate precursor is improved comprehensively.

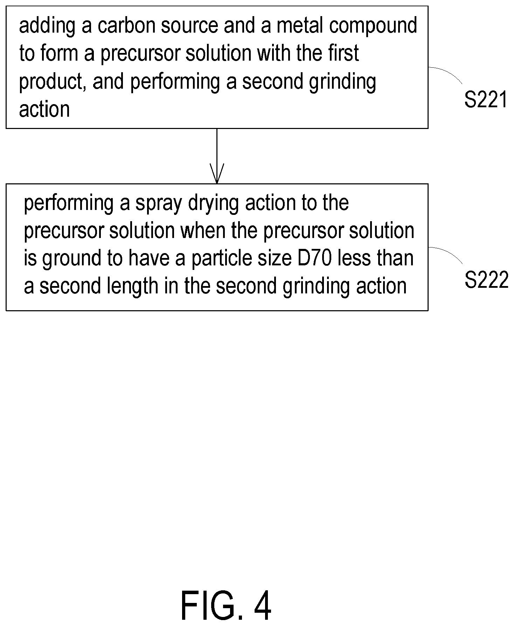

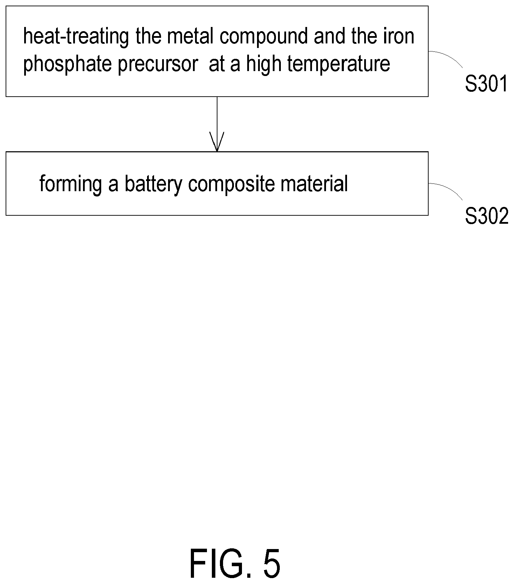

Notably, it allows the preparation method of iron phosphate precursor of the present disclosure to cooperate the preparation of the battery composite material. FIG. 4 schematically illustrates a detailed flow chart of the preparation method of the iron phosphate precursor cooperated to form a battery composite material according to an embodiment of the present disclosure. FIG. 5 schematically illustrates another detailed flow chart of the preparation method of the iron phosphate precursor cooperated to form the battery composite material according to an embodiment of the present disclosure. In the embodiment, as shown in the step S221, a carbon source and a metal compound for producing the battery composite material are added into the first product, which is formed through the sufficient reaction between the aforementioned phosphoric acid solution and the iron powder, so that a precursor solution is formed by the carbon source, the metal compound and the first product, and a second grinding action is further performed. Preferably but not exclusively, in the embodiment, the carbon source is carbohydrate, organic compound, polymer or macromolecular material. In some embodiments, the carbohydrate is not limited to fructose, sucrose, lactose or galactose. The macromolecule material is not limited to polyvinylpyrrolidone, and the formula of the macromolecule material is written as (C₆H₉NO)ₙ, among which n is a natural number, and the IUPAC name of the macromolecule material is PVP. In the embodiment, the metal compound is one selected from the group consisting of lithium hydroxide (LiOH), lithium carbonate (Li₂CO₃), a compound consisting of lithium, and a mixture of several compounds consisting of lithium, but not limited thereto.

Then, as shown in the step S222, a spray drying action is performed to the precursor solution when the precursor solution is ground to have a particle size D70 less than a second length in the second grinding action. Preferably but not exclusively, in the embodiment, the second grinding action is performed at the identical rotational speed of the first grinding action, and the rotational speed ranges from 450 rpm to 650 rpm. In the embodiment, the spray drying action is implemented by a rotary spray dryer, an entrance temperature of the rotary spray dryer is 210 °C, an exit temperature of the rotary spray dryer is 95 °C, and a rotational speed of the rotary spray dryer ranges from 300 Hz to 400 Hz, but not limited thereto. In the embodiment, the carbon source is added mainly to block grain growth and avoid excessive melting. The conventional dispersant used in spray drying moving parts is a dispersant containing metal ions. However, in the present disclosure, the carbon source is used to replace the conventional dispersant. Since the carbon source is an organic compound, it can not only serve as an auxiliary function as a dispersant, but can also be removed by subsequent heat-treating in air or oxygen. No other metal cations remain, so the purity of the product is further improved. Certainly, the present disclosure is not limited thereto.

As shown in the step S301, after the spray drying action, the metal compound and the iron phosphate precursor are heat-treated at a high temperature and spray-dried. In the embodiment, the metal compound and the iron phosphate precursor spray-dried are placed in air or oxygen atmosphere, heat-treated at a temperature of 325°C for 0.5 hours firstly, heat-treated at a temperature of 550°C for 0.5 hours, and then heat-treating at a temperature of 650°C for 1 hour. Finally, as shown in the step S302, the iron phosphate precursor composite material formed by the metal compound and the iron phosphate precursor is heat-treated to form a battery composite material. Preferably but not exclusively, the battery composite material is for example LiFePO₄. In other embodiment, the metal oxide, such as V₂O₅ or MgO, can be added into the step S221, so that a LiFePO₄-like material consisting of the metal oxide is produced, which can be called or named "lithium ferric phosphate nano-co-crystalline olivine (LFP-NCO)".

It can be seen that, through the two-segmented reaction of the phosphoric acid, the deionized water and the iron powder in the present disclosure, it ensures the full reaction of phosphoric acid and iron powder, and achieves the effects of significantly reducing the waste of raw materials and comprehensively improving product quality. Furthermore, the preparation method of iron phosphate precursor is further cooperated to form the battery composite material, and it helps to significantly shorten the time required for grinding, thereby reducing the process time and the money costs. At the same time, combined with the changes in many parameters mentioned above, the pH sensitivity of the manufacturing process can be reduced, the viscosity of the raw material and the blockage of processing pipes are avoided, the processing temperature is stably controlled, and the operational difficulty of the manufacturing process and the mass production line is reduced.

The following embodiment is presented herein for purpose of illustration and description of the preparation method of the iron phosphate precursor of the present disclosure.

### Example 1:

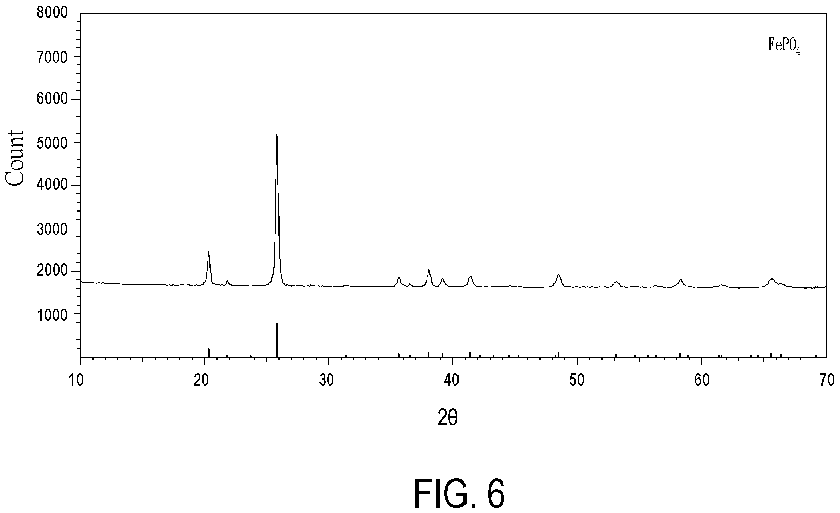

At first, 12.385 grams of phosphoric acid (Purity>85%), 50 cc deionized water and 6 grams of iron powder (Purity>99%) are provided. The iron powder has the apparent density of the iron powder ranging from 2.3 g/cm³ to 2.6 g/cm³, the maximum particle size of the iron powder is less than 212 µm, and the fine powder weight of the iron powder less than or equal to 45 µm is 21.6 % of the total weight of the iron powder. The phosphoric acid and the iron powder are placed in the water-jacket reaction tank for the two-segmented reaction of the aforementioned steps S201 and S202 and stirred. After the second phosphoric acid solution consisting of the second quantity of the phosphoric acid is added and the reaction continues for 5 hours, as shown in the aforementioned steps S211 and S212, a horizontal-sand mill is used for grinding (at a rotational speed 550 rpm) to perform the first grinding action and grind the first product to have the particle size D99 smaller than 100 µm, and then the reaction is lasted for 6 hours. The first product is spray-dried and then heat-treated continuously at a temperature ranging from 610°C to 670°C for a holding time of at least one hour to obtain the iron phosphate precursor. FIG. 6 schematically illustrates the X-ray Diffraction (XRD) analysis diagram of the iron phosphate precursor. After comparing the diagram with JCPDS card, the compound of the iron phosphate precursor is confirmed to be FePO₄.

### Example 2:

In Example 2, 12.385 grams of phosphoric acid (Purity>85%), 50 cc deionized water and 6 grams of iron powder (Purity>99%) are provided. The iron powder for producing the iron phosphate precursor has the apparent density of the iron powder ranging from 2.3 g/cm³ to 2.6 g/cm³, the maximum particle size of the iron powder is less than 212 µm, and the fine powder weight of the iron powder less than or equal to 45 µm is 13.3 % of the total weight of the iron powder. The phosphoric acid and the iron powder are placed in the water-jacket reaction tank for the two-segmented reaction of the aforementioned steps S201 and S202 and stirred. The initial reaction speed between the phosphoric acid and the iron powder is moderate (initial heating rate 1.54°C/min), and the reaction process has good operability. The phosphoric acid is used for de-gelling. The relative conversion rate of the first product is about 90.3%, the final particle size D99 is 110.2 µm, and the final pH value is 2.41.

### Example 3:

In Example 3, 12.385 grams of phosphoric acid (Purity>85%), 50 cc deionized water and 6 grams of iron powder (Purity>99%) are provided. The iron powder for producing the iron phosphate precursor has the apparent density of the iron powder ranging from 2.3 g/cm³ to 2.6 g/cm³, the maximum particle size of the iron powder is less than 212 µm, and the fine powder weight of the iron powder less than or equal to 45 µm is 25.0 % of the total weight of the iron powder. The phosphoric acid and the iron powder are placed in the water-jacket reaction tank for the two-segmented reaction of the aforementioned steps S201 and S202 and stirred. The initial reaction speed between the phosphoric acid and the iron powder is moderate (initial heating rate 1.54°C/min), and the manual assistance is required for de-gelling in the reaction process. The relative conversion rate of the first product is about 98.1%, the final particle size D99 is 133.4 µm, and the final pH value is 2.35.

### Example 4:

In Example 4, 12.385 grams of phosphoric acid (Purity>85%), 50 cc deionized water and 6 grams of iron powder (Purity>99%) are provided. The iron powder for producing the iron phosphate precursor has the apparent density of the iron powder ranging from 2.3 g/cm³ to 2.6 g/cm³, the maximum particle size of the iron powder is less than 212 µm, and the fine powder weight of the iron powder less than or equal to 45 µm is 16.4 % of the total weight of the iron powder. The phosphoric acid and the iron powder are placed in the water-jacket reaction tank for the two-segmented reaction of the aforementioned steps S201 and S202 and stirred. The initial reaction speed between the phosphoric acid and the iron powder is gentle (initial heating rate 1.40°C/min), and the manual assistance is required for de-gelling in the reaction process. The relative conversion rate of the first product is about 95.9%, the final particle size D99 is 119.4 µm, and the final pH value is 2.23.

### Comparative Example 1:

In Comparative Example 1, 12.385 grams of phosphoric acid (Purity>85%), 50 cc deionized water and 6 grams of iron powder (Purity>99%) are provided. The iron powder for producing the iron phosphate precursor has the apparent density of the iron powder ranging from 2.3 g/cm³ to 2.6 g/cm³, the maximum particle size of the iron powder is less than 212 µm, and the fine powder weight of the iron powder less than or equal to 45 µm is 5.0 % of the total weight of the iron powder. The phosphoric acid and the iron powder are placed in the water-jacket reaction tank for the two-segmented reaction of the aforementioned steps S201 and S202 and stirred. The initial reaction speed between the phosphoric acid and the iron powder is too fast (initial heating rate 1.71°C/min), and the reaction process has good operability. No need to use the phosphoric acid for de-gelling. The relative conversion rate of the first product is about 85.1%, the final particle size D99 is 100.0 µm, and the final pH value is 2.51.

**Table 1 lists the reaction processes and final result comparisons of Comparative Example 1, Example 2, Example 3 and Example 4.**

| | Comparative Example 1 | Example 2 | Example 3 | Example 4 |
|---|---|---|---|---|
| Ratio of fine particle iron powder ≦ 45 µm | 5.0% | 13.3 % | 25.0 % | 16.4 % |
| Initial heating rate | 1.71 °C/min | 1.54 °C/min | 1.54 °C/min | 1.40 °C/min |
| Phosphoric acid used for de-gelling | 0 | 160 ml | 320 ml | 160 ml |
| De-gelling operability | Good | Good | Not good | Not good |
| Relative conversion rate | 85.1 % | 90.3 % | 98.1 % | 95.9 % |
| Final particle size D99 | 100.0 µm | 110.2 µm | 133.4 µm | 119.4 µm |
| Final pH value | 2.51 | 2.41 | 2.35 | 2.23 |

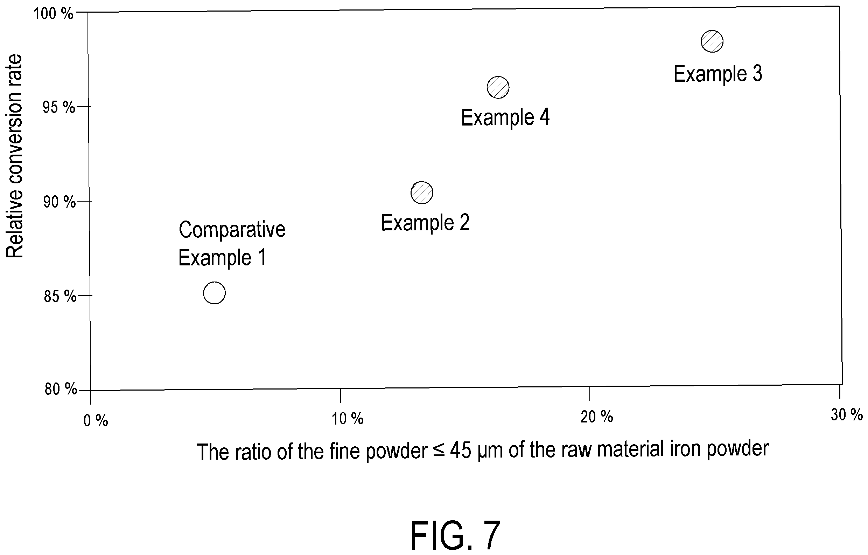

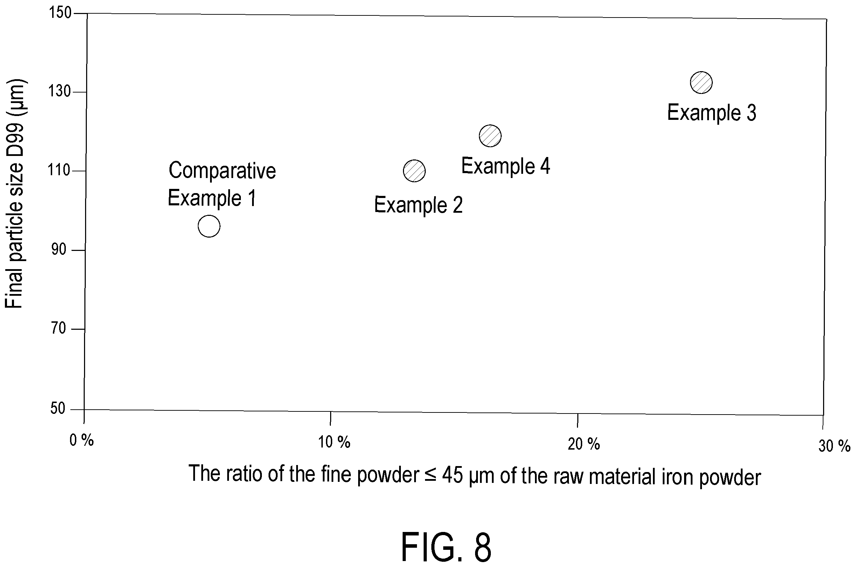

FIG. 7 shows the relationship between the ratio of the fine powder ≦ 45 µm of the raw material iron powder and the relative conversion rate of the first product obtained. FIG. 8 shows the relationship between the ratio of the fine powder ≦ 45 µm of the raw material iron powder and the final particle size D99 of the first product obtained. It can be seen from the results in Table 1, FIG. 7 and FIG. 8 that when the ratio of the fine particle iron powder ≦ 45 µm relative to the total raw material iron powder is increased, the relative conversion rate of the first product is increased, and the final particle size D99 of the first product is increased. When the ratio of the fine particle iron powder ≦ 45 µm relative to the total raw material iron powder approaches 30%, the increase in relative conversion rate tends to be flattened. The ratio of the fine particle iron powder ≦ 45 µm relative to the total raw material iron powder is not related to the final pH value. By increasing the ratio of the fine particle iron powder ≦ 45 µm relative to the total raw material iron powder, the relative conversion rate and the final particle size of the first product can be improved significantly. However, the gel swelling during the reaction process is serious, the amount of the phosphoric acid for de-gelling needs to be increased, the manual assistance is required for de-gelling in the reaction process, and the operability is not good. Therefore, the raw iron powder of the present disclosure is controlled in the specific specification to have the apparent density of the iron powder ranging from 2.3 g/cm³ to 2.6 g/cm³, the BET surface area ranging from 700 cm²/g to 1300 cm²/g, the maximum particle size of the iron powder less than 212 µm, and the fine powder weight of the iron powder ≦ 45 µm accounting between 10 % and 30 % of the total weight of the iron powder. In this way, the preparation reaction of the iron phosphate precursor can be optimized to avoid the reaction rate being too fast and increasing the difficulty of the manufacturing process operation. At the same time, the product quality is improved.

In the embodiment, the gelling-stage reaction in the aforementioned reaction process can be regarded as the initial reaction degree (exothermic degree). The gelling-stage reaction can be slowed down by increasing the holding temperature of the water-jacket reaction tank or increasing the proportion of large particle size iron powder. When the holding temperature of the water-jacket reaction tank is controlled between 45°C and 60°C, the subsequent conversion rate of the first product won't be affected. However, when the holding temperature of the water-jacket reaction tank is increased to 65°C, the conversion rate of the first product will be decreased.

In other embodiments, if there is the iron powder reactant that has not completely reacted in the two-segmented reaction of the phosphoric the acid and the iron powder, it allows to cooperate with the above-mentioned grinding process to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively. It allows to combine the preparation method of the iron phosphate precursor and the preparation of the battery composite material, and it helps to significantly shorten the time required for grinding, thereby reducing the process time and the money costs. At the same time, combined with the changes in many parameters mentioned above, the pH sensitivity of the manufacturing process can be reduced, the viscosity of the raw material and the blockage of processing pipes are avoided, the processing temperature is stably controlled, and the operational difficulty of the manufacturing process and the mass production line is reduced. Certainly, the applications of the iron phosphate precursor in this present disclosure is not limited thereto, and will not be redundantly described hereafter.

In summary, the present disclosure provides a preparation method of an iron phosphate precursor for batteries, so as to improve the product quality, reduce the raw material cost, the time cost and the operational difficulty of the process. By controlling the specification of the raw iron powder, the preparation reaction of the iron phosphate precursor is optimized to avoid the reaction rate being too fast and increasing the difficulty of the manufacturing process operation. On the other hand, in the two-segmented reaction of the phosphoric acid, the deionized water and the iron powder, if the iron powder reactant is not reacted completely, the grinding process can be further cooperated to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively. Through the two-segmented reaction of the phosphoric acid, the deionized water and the iron powder, it ensures the full reaction of phosphoric acid and iron powder, and achieves the effects of significantly reducing the waste of raw materials and comprehensively improving product quality. Furthermore, the preparation method of iron phosphate precursor is further cooperated to form the battery composite material, and it helps to significantly shorten the time required for grinding, thereby reducing the process time and the money costs. At the same time, the pH sensitivity of the manufacturing process can be reduced, the viscosity of the raw material and the blockage of processing pipes are avoided, the processing temperature is stably controlled, and the operational difficulty of the manufacturing process and the mass production line is reduced.

## Claims

1. A preparation method of an iron phosphate precursor for batteries, **characterized by** comprising steps of:
(a) providing a phosphoric acid and an iron powder, wherein the iron powder has an apparent density of the iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder;
(b) reacting the phosphoric acid with the iron powder to generate a first product; and
(c) heat-treating the first product in an air or oxygen atmosphere to form the iron phosphate precursor.

2. The preparation method of the iron phosphate precursor for the batteries according to claim 1, wherein the iron powder has a BET surface area ranging from 700 cm²/g to 1300 cm²/g, the first particle-size range is less than 212 µm and greater than 45 µm, and the second particle-size range is less than or equal to 45 µm.

3. The preparation method of the iron phosphate precursor for the batteries according to claim 1 or 2, wherein the step (c) is performed at a temperature ranging from 610°C to 670°C for a holding time of at least one hour.

4. The preparation method of the iron phosphate precursor for the batteries according to any of the preceding claims, wherein the first particle-size range is less than 212 µm and greater than 45 µm, the second particle-size range is less than or equal to 45 µm, and the weight of the iron powder in the second particle-size range accounts between 10 % and 25 % of the total weight of the iron powder.

5. The preparation method of the iron phosphate precursor for the batteries according to any of the preceding claims, wherein the first product is amorphous phosphates, and the formula of the first product is written as a-FePO₄ • xH₂O, wherein x > 0.

6. The preparation method of the iron phosphate precursor for the batteries according to any of the preceding claims, wherein the step (b) further comprises steps of:
(b11) allowing deionized water to dissolve a first quantity of the phosphoric acid for forming a first phosphoric acid solution at a first temperature;
(b12) processing a reaction of the first phosphoric acid solution and the iron powder at a second temperature, lowering the reaction temperature to a third temperature after the second temperature is reached by the reaction temperature, and maintaining the reaction temperature for a first time period; and
(b13) lowering the reaction temperature to a fourth temperature and adding a second phosphoric acid solution consisting of a second quantity of the phosphoric acid, and processing a reaction of the first phosphoric acid solution, the second phosphoric acid solution and the iron powder for a second time period, so as to produce the first product.

7. The preparation method of the iron phosphate precursor for the batteries according to claim 6, wherein the weight ratio of the first quantity to the second quantity is 3:1, wherein the first temperature ranges from 35 °C to 45 °C, the second temperature is equal to or less than 60 °C, the third temperature is equal to or less than 50 °C, and the fourth temperature is equal to or less than 30 °C, wherein the first time period is at least 3 hours and the second time period ranges from 5 hours to 9 hours.

8. The preparation method of the iron phosphate precursor for the batteries according to claim 6 or 7, wherein the step (b) further comprises steps of:
(b21) performing a first grinding action to grind the first product to have a particle size D99 smaller than a first length; and
(b22) processing the reaction for a third time period.

9. The preparation method of the iron phosphate precursor for the batteries according to claim 8, wherein the first length is less than 100 µm, and the third time period ranges from 6 hours to 12 hours.

10. The preparation method of the iron phosphate precursor for the batteries according to claim 8 or 9, wherein the step (b) further comprises steps of:
(b31) adding a carbon source and a metal compound to form a precursor solution with the first product, and performing a second grinding action; and
(b32) performing a spray drying action to the precursor solution when the precursor solution is ground to have a particle size D70 less than a second length in the second grinding action.

11. The preparation method of the iron phosphate precursor for the batteries according to claim 10, wherein the spray drying action is implemented by a rotary spray dryer, an entrance temperature of the rotary spray dryer is 210 °C, an exit temperature of the rotary spray dryer is 95 °C, and a rotational speed of the rotary spray dryer ranges from 300 Hz to 400 Hz.

12. The preparation method of the iron phosphate precursor for the batteries according to claim 10 or 11, wherein the second length ranges from 1 µm to 10 µm.

13. The preparation method of the iron phosphate precursor for the batteries according to any of claims 10 to 12, wherein the first grinding action and the second grinding action are performed at a rotational speed ranging from 450 rpm to 650 rpm.

14. The preparation method of the iron phosphate precursor for the batteries according to any of claims 10 to 13, wherein the metal compound and the iron phosphate precursor form an iron phosphate precursor composite material in the step (c), and are heat-treated to form a battery composite material, wherein the chemical formula of the battery composite material is LiFePO₄, and the metal compound is a lithium-containing compound.

15. The preparation method of the iron phosphate precursor for the batteries according to claim 14, wherein the lithium-containing compound is one selected from the group consisting of lithium hydroxide, lithium carbonate and a mixture thereof, and the battery composite material is a lithium ferric phosphate nano-co-crystalline olivine (LFP-NCO), wherein the step (c) includes heat-treating at a temperature of 325°C for 0.5 hours, heat-treating at a temperature of 550°C for 0.5 hours, and heat-treating at a temperature of 650°C for 1 hour.

## Amended claims

### Amended claims in accordance with Rule 137(2) EPC.

1. A preparation method of an iron phosphate precursor for batteries, **characterized by** comprising steps of:
(a) providing a phosphoric acid and an iron powder, wherein the iron powder has an apparent density of the iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder, wherein the first particle-size range is less than 212 µm and greater than 45 µm, and the second particle-size range is less than or equal to 45 µm;
(b) reacting the phosphoric acid with the iron powder to generate a first product, wherein the first product is amorphous phosphates, and the formula of the first product is written as a-FePO₄·xH₂O, wherein x > 0; and
(c) heat-treating the first product in an air or oxygen atmosphere to form the iron phosphate precursor, wherein the step (c) is performed at a temperature ranging from 610°C to 670°C for a holding time of at least one hour.

2. The preparation method of the iron phosphate precursor for the batteries according to claim 1, wherein the iron powder has a BET surface area ranging from 700 cm²/g to 1300 cm²/g.

3. The preparation method of the iron phosphate precursor for the batteries according to any of the preceding claims, wherein the weight of the iron powder in the second particle-size range accounts between 10 % and 25 % of the total weight of the iron powder.

4. The preparation method of the iron phosphate precursor for the batteries according to any of the preceding claims, wherein the step (b) further comprises steps of:
(b11) allowing deionized water to dissolve a first quantity of the phosphoric acid for forming a first phosphoric acid solution at a first temperature;
(b12) processing a reaction of the first phosphoric acid solution and the iron powder at a second temperature, lowering the reaction temperature to a third temperature after the second temperature is reached by the reaction temperature, and maintaining the reaction temperature for a first time period; and
(b13) lowering the reaction temperature to a fourth temperature and adding a second phosphoric acid solution consisting of a second quantity of the phosphoric acid, and processing a reaction of the first phosphoric acid solution, the second phosphoric acid solution and the iron powder for a second time period, so as to produce the first product, wherein the weight ratio of the first quantity to the second quantity is 3:1, wherein the first temperature ranges from 35 °C to 45 °C, the second temperature is equal to or less than 60 °C, the third temperature is equal to or less than 50 °C, and the fourth temperature is equal to or less than 30 °C, wherein the first time period is at least 3 hours and the second time period ranges from 5 hours to 9 hours.

5. The preparation method of the iron phosphate precursor for the batteries according to claim 4, wherein the step (b) further comprises steps of:
(b21) performing a first grinding action to grind the first product to have a particle size D99 smaller than a first length, wherein the first grinding action is performed at a rotational speed ranging from 450 rpm to 650 rpm; and
(b22) processing the reaction for a third time period, wherein the first length is less than 100 µm, and the third time period ranges from 6 hours to 12 hours.

6. The preparation method of the iron phosphate precursor for the batteries according to claim 5, wherein the step (b) further comprises steps of:
(b31) adding a carbon source and a metal compound to form a precursor solution with the first product, and performing a second grinding action, wherein the second grinding action is performed at a rotational speed ranging from 450 rpm to 650 rpm, and the metal compound is a lithium-containing compound; and
(b32) performing a spray drying action to the precursor solution when the precursor solution is ground to have a particle size D70 less than a second length in the second grinding action, wherein the spray drying action is implemented by a rotary spray dryer, an entrance temperature of the rotary spray dryer is 210 °C, an exit temperature of the rotary spray dryer is 95 °C, and a rotational speed of the rotary spray dryer ranges from 300 Hz to 400 Hz, wherein the second length ranges from 1 µm to 10 µm.
